# EUROPEAN PATENT SPECIFICATION

(11) **EP 3 187 421 B1**
(45) Date of publication and mention of the grant of the patent: **19.09.2018**
(21) Application number: 16205488.6
(22) Date of filing: 20.12.2016
(51) Int. Cl.: B64D 29/00, B64F 5/40

(54) **V-BLADE AND V-GROOVE JOINT MOLDED COMPOSITE WEAR SLEEVE**
VERSCHLEISSSCHUTZMANSCHETTE AUS GEFORMTEM VERBUNDSTOFF FÜR V-LAMELLEN- UND V-NUT-VERBINDUNG
MANCHON DE PROTECTION EN COMPOSITE MOULÉ DE JONCTION DE LAME EN V ET DE RAINURE EN V

(30) Priority: 31.12.2015 PL 41548715
(43) Date of publication of application: 05.07.2017
(73) Proprietor: General Electric Company, Schenectady, NY 12345 (US)
(72) Inventor: DURCHHOLZ, Anthony John, Cincinnati, OH 45215 (US); BLACKBURN, Michelle Ann, Cincinnati, OH 45215 (US); ROBINSON, Jordan Daniel, Cincinnati, OH 45215 (US); RAVENHALL, John Andrew, Cincinnati, OH 45215 (US); SZEHIDEWICZ, Kamil, Cincinnati, OH 45215 (US); HERNANDEZ LANGFORD, Carla Patricia, Cincinnati, OH 45215 (US)
(74) Representative: Williams, Andrew Richard

(56) References cited:
- EP-A1- 0 845 581
- EP-A1- 2 913 179
- EP-A2- 2 072 397
- FR-A1- 2 379 433
- US-A1- 2014 294 573

## Description

### TECHNICAL FIELD

The present invention relates generally to aircraft gas turbine engine cowls and, more specifically, to a V-blade and V-groove used to help keep the cowls closed.

### BACKGROUND INFORMATION

Aircraft bypass gas turbine engines typically employ thrust reversers for ground deceleration. The thrust reversers may be located in the fan bypass duct radially between an outer nacelle and an engine core cowl and axially between a fan and a fan nozzle. One type of thrust reverser envelops the engine around its circumference for the length of the reverser. For maintenance, to access the portion of the engine that is enveloped by the thrust reverser, the thrust reverser may be located within an outer cowling constructed as two clamshell structures that are pivoted from the pylon and can be opened when the engine is not in service.

The clamshells hinge upon the aircraft pylon with the forward end of the clamshell having a tongue-in-groove fit to the main engine that serves two purposes when the engine is operating. The first purpose is to seal the flow that is directed from the fan bypass into either the thrust reverser or fan nozzle. The second purpose is to provide support of the thrust reverser at its forward end. Typically, only a latch opposite the clamshell hinge holds the two halves of the clamshell together. This latch provides hoop integrity of the two clamshells during engine operation, but otherwise, does not further constrain the thrust reverser tongue (often called the V-Blade) in the engine groove (often called the V-groove). The tongue is often called a V-blade and is usually on the cowl and fits into the engine groove often called V-groove on an engine fan casing. Clamping apparatus incorporating knife-edges and mating grooves (similar to V-blades and corresponding V-grooves) have been used to secure or clamp the cowls.

There is often a lot of relative motion at an interface between the V-blade and V-groove due to the inherent flexibility of the thrust reverser clamshell halves, the lack of rigidity due to there only being two circumferential points of constraint of the clamshell halves, and the high vibratory environment induced by buffeting aero loads, especially during thrust reverser deployment. High contact stress and relative motion between these V-blade and V-groove structures necessitates a wear coating at a contact surface between the two in order to keep the two parts from excessively fretting each other, which can either dimensionally compromise the load carrying capacity of the joint and/or expose it to further deterioration by corrosion.

Some wear coatings at this joint have included metalized coatings of some sort such as Cu-Ni-IN or hard anodize usually applied to both the V-groove and V-blade. A more robust wear protection is desired to provide a longer life and greater durability.

EP 2 913 179 A1 relates to a cylindrical case and process for producing a cylindrical case and discloses a fan case made of a laminate of biaxial fabric layers, with the fan case having a groove in which a wall of the groove is covered with a Ti-alloy or Ni-alloy cover to avoid wear.

### SUMMARY OF THE INVENTION

A clamping assembly as defined in claim 1 comprises: an annular molded composite wear sleeve, an epoxy or other bonding agent, an annular groove ring, and an annular V-blade, wherein the annular groove ring comprises an annular V-groove, the annular molded composite wear sleeve is bonded with the epoxy or other bonding agent in the annular V-groove in the groove ring, wherein the V-blade is matable with the wear sleeve.

The wear sleeve (40) may include forward and aft sleeve walls (46, 48) extending at forward and aft sleeve obtuse angles (50, 52) respectively away from a sleeve bottom (44) and annular forward and aft sleeve fillets (54, 56) may be between the sleeve bottom (44) and the forward and aft sleeve walls (46, 48). The aft sleeve wall (48) may include an aft flap (60) compliant with an annular aft taper (62) on the annular groove ring (64) containing the V-groove (34).

In an embodiment an aircraft gas turbine engine cowl clamping mechanism (22) for clamping a clamshell cowl (20) to a fan casing (26) includes the groove ring (64) on a fan casing (26) and the annular molded composite wear sleeve (40) bonded with epoxy or other bonding agent in the annular V-groove (34) in the groove ring (64). An annular V-blade (30) may be attached to the clamshell core engine cowl (20) which is rotatable to insert the annular V-blade (30) in the annular V-groove (34).

In a further embodiment an aircraft turbofan gas turbine engine (10) includes a reverser (80) and a bypass duct extension (84) mounted to a clamshell core engine cowl (20) and radially spaced apart inner and outer cowl clamping mechanisms (90, 92) clamping radially spaced apart annular inner and outer duct walls (94, 96) of the bypass duct extension (84) to radially spaced apart annular inner and outer fan casings (100, 102) respectively of the engine (10). The inner and outer cowl clamping mechanisms (90, 92) include inner and outer V-blades (106, 108) on forward ends (110) of the inner and outer duct walls (94, 96) and inner and outer V-grooves (112, 114) in inner and outer groove rings (120, 122) on aft ends (116) of the inner and outer fan casings (100, 102) respectively. Annular inner and outer molded composite wear sleeves (40) are bonded with epoxy or other bonding agent in the inner and outer V-grooves (112, 114) respectively. The clamshell core engine cowl (20) may be rotatable for inserting the inner and outer V-blades (106, 108) in the inner and outer V-grooves (112, 114) respectively.

A method for preventing excessive fretting between an annular V-blade and a mating annular V-groove in an annular groove ring is provided in accordance with claim 9. The method comprises: bonding an annular molded composite wear sleeve with epoxy or other bonding agent in the annular V-groove in the annular groove ring; and mating the V-blade with the wear sleeve.

The method may include grit blasting or otherwise removing old and possibly corroded material from a V-groove surface (72) of the annular V-groove (34) before bonding the wear sleeve (40) in the V-groove (34). The method may include grit blasting down to bare metal of the V-groove surface (72) then coating the entire bare V-groove surface (72) with a structural bonding agent (74) that is resistant to corrosion.

The method may further include laying on the annular molded composite wear sleeve (40) and fitting the wear sleeve (40) to a three dimensional contour of the V-groove (34) such that essential points of contact for load transferal between the V-blade (30) and the V-groove (34) are formed after the coating of the entire bare V-groove surface (72) with the structural bonding agent (74). The method may be performed with the engine mounted on an aircraft.

### BRIEF DESCRIPTION OF THE DRAWINGS

The invention, in accordance with preferred and exemplary embodiments, is more particularly described in the following detailed description taken in conjunction with the accompanying drawings in which:
FIG. 1 is a perspective view illustration of an exemplary aircraft turbofan gas turbine engine with a cowl and a wear edge guard for a V-blade and V-groove cowl clamping mechanism.
FIG. 2 is an enlarged perspective view illustration of the exemplary aircraft turbofan gas turbine engine V-blade and V-groove clamping mechanism illustrated in FIG. 1.
FIG. 3 is a cross-sectional schematic view illustration of the exemplary aircraft turbofan gas turbine engine including a V-groove illustrated in FIG. 2 on the engine's fan case.
FIG. 4 is a cross-sectional schematic view illustration of a wear sleeve located between the V-blade and V-groove illustrated in FIG. 3.
FIG. 5 is a perspective view illustration of the wear sleeve illustrated in FIG. 4.
FIG. 6 is a cross-sectional schematic view illustration of an exemplary aircraft turbofan gas turbine engine with a cowl mounted reverser and radially inner and outer wear sleeves for inner and outer V-blade and V-groove cowl clamping mechanisms.
FIG. 7 is an enlarged cross-sectional schematic view illustration of view illustration of the radially inner and outer wear sleeves for the inner and outer V-blade and V-groove cowl clamping mechanisms illustrated in FIG. 6.

### DETAILED DESCRIPTION OF THE INVENTION

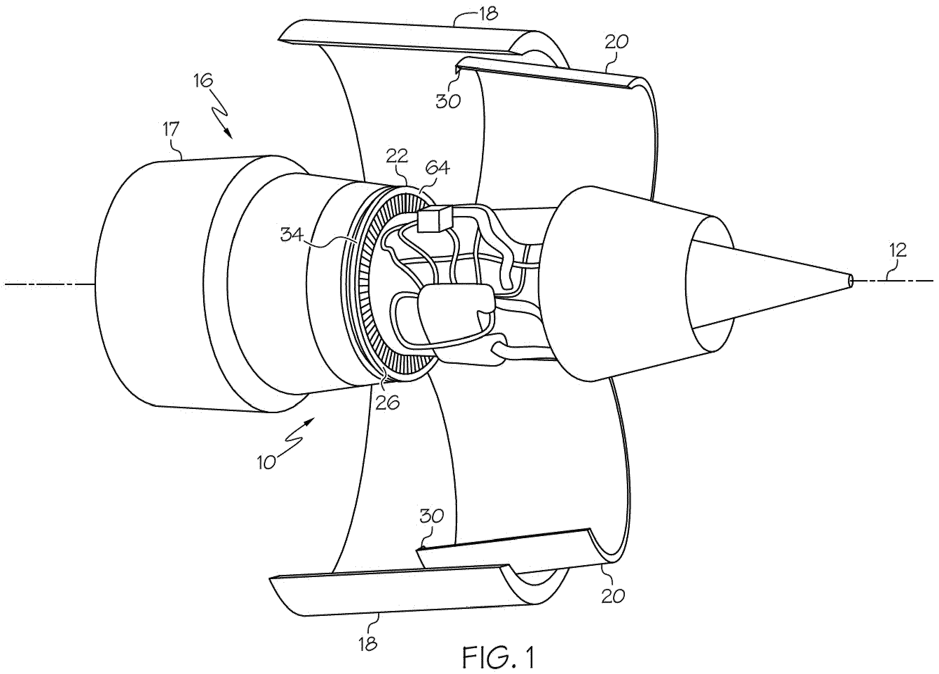

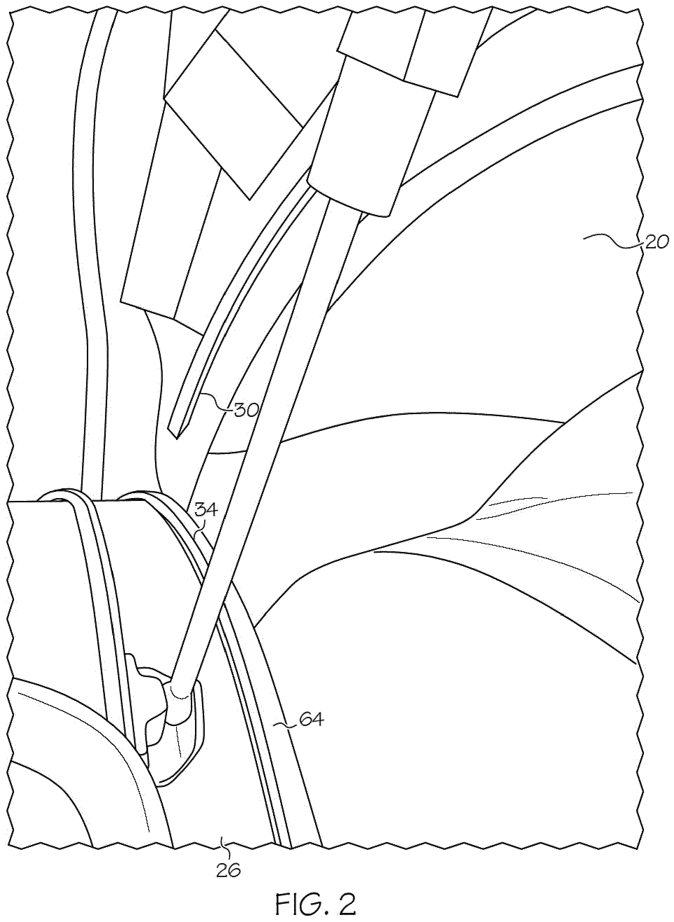

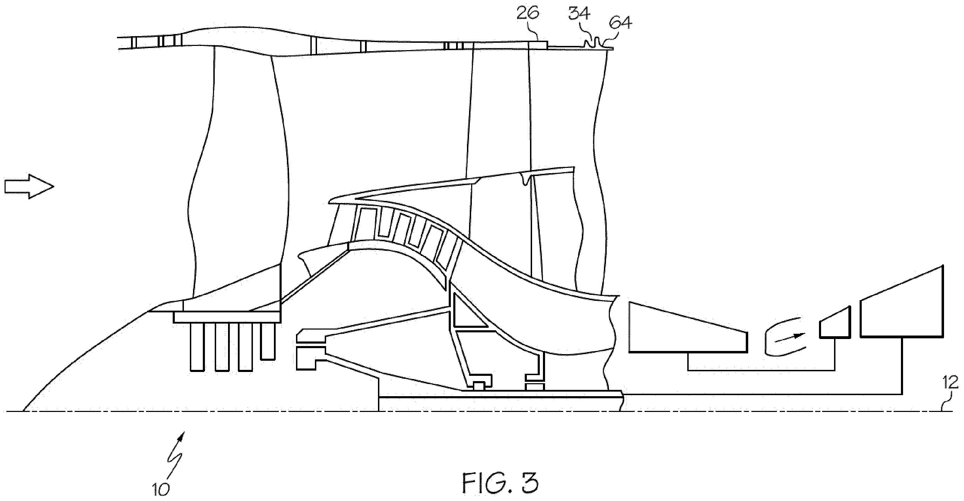

FIGS. 1-3 illustrates an exemplary aircraft gas turbine engine 10 for mounting on a support member or pylon, and a nacelle 16 generally circumscribing portions of the gas turbine engine 10 about a longitudinal centerline axis 12. The nacelle 16 includes an inlet 17 followed by a clamshell fan cowl 18. The nacelle 16 further includes clamshell core engine cowls 20 aft and downstream of the fan cowl 18 and is illustrated in FIG. 1 without a thrust reverser or bypass duct extension. A cowl clamping mechanism 22 for clamping the clamshell cowls 20 to a fan casing 26 of the engine 10 includes annular V-blades 30 on the clamshell core engine cowls 20 and annular V-grooves 34 in groove rings 64 on the fan casing 26 illustrated in greater detail in FIG. 2. Alternatively, the V-blades 30 may be on the fan casing 26 and V-grooves 34 in groove rings 64 on the clamshell cowls 20. The groove rings may also be made from non-metallic composite materials.

The V-blades 30 and the V-grooves 34 are annular and the V-blades 30 mate or fit into the V-grooves 34 when the clamshell core engine cowls 20 are rotated about hinges (not illustrated herein) and closed as is well known in the cowl field. When the clamshell cowls 20 are closed and the V-blades 30 are received in the V-grooves 34, there is often a lot of relative motion at this V-blade to V-groove interface 38 due to the inherent flexibility of the clamshell cowls 20 or other types of cowls used in aircraft engine nacelles. There is a lack of rigidity due to there only being two circumferential points of constraint of the clamshell cowl halves. This is also a highly vibratory environment induced by buffeting aero loads, especially during thrust reverser deployment.

The high contact stress and relative motion between the V-blades 30 in the V-grooves 34 has previously led to the adoption of metalized wear coatings, such as Cu-Ni-IN or hard anodize, on the contact surfaces of the V-blade to V-groove interface 38 in order to keep the two parts from excessively fretting each other. This fretting can dimensionally compromise the load carrying capacity of the clamping joint and/or expose it to further deterioration by corrosion. However, these metalized wear coatings still do not have adequate durability against this fretting and/or corrosion and must be refurbished many times within the normal life cycle of an engine.

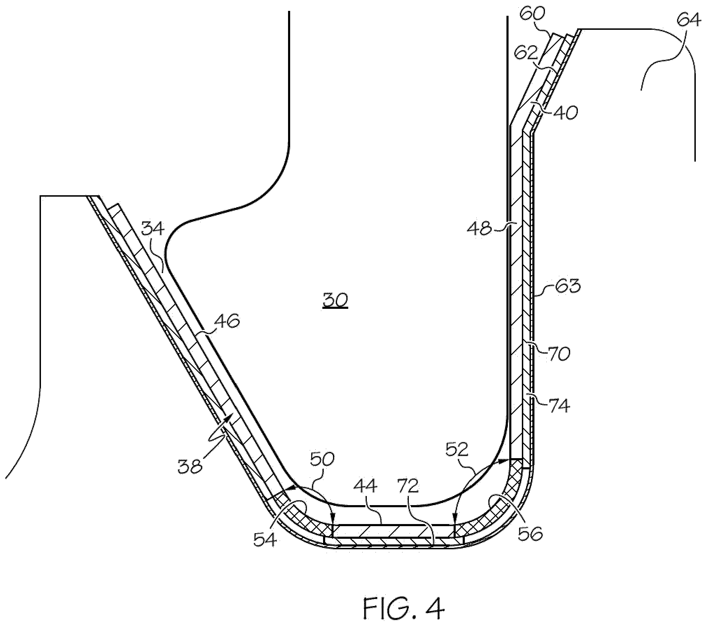

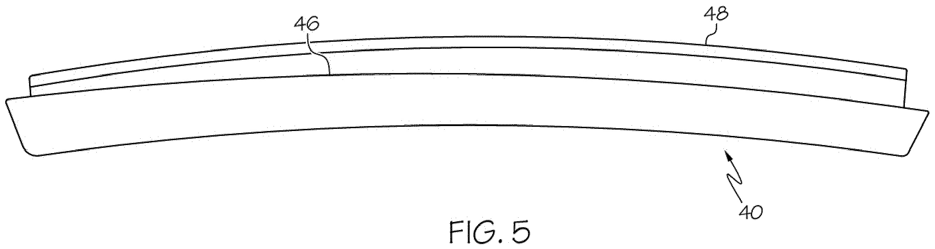

Disclosed herein and illustrated in FIGS. 4 and 5 is an annular molded composite wear sleeve 40 which may be bonded with epoxy or other bonding agent or otherwise attached into the V-groove 34 to serve as the wear material system to protect the V-blade to V-groove interface 38 from fretting and protect it from corrosion. The wear sleeve 40 provides a longer life than the coatings of the prior art. The wear sleeve 40 is sacrificial to the opposing wear coatings on the V-blade 30 so as to not jeopardize its wear durability. Alternatively, in a non-claimed example, the composite wear sleeve could be bonded to the V-blade 30 and the V-groove 34 may be coated with the metalized coatings. The clamshell core engine cowl 20 is rotatable for inserting the annular V-blade 30 in the annular V-groove 34.

The molded composite wear sleeve 40 illustrated in FIGS. 4-5 is annular having a sleeve bottom 44 and forward and aft sleeve walls 46, 48 extending at forward and aft sleeve obtuse angles 50, 52 respectively away from the sleeve bottom 44. Annular forward and aft sleeve fillets 54, 56 connect the sleeve bottom 44 to the forward and aft sleeve walls 46, 48 respectively. The aft sleeve wall 48 includes an aft flap 60 which complies with an aft taper 62 of the groove ring 64 which contains the V-groove 34. The aft taper 62 helps seat the V-blade 30 in the V-groove 34. The wear sleeve 40 is bonded to a substrate 63 such as the groove ring 64 with a bonding agent illustrated herein as a bonding layer 70 between the wear sleeve 40 and the groove ring 64 in FIG. 4.

The wear sleeve 40 may be a composite material including a Kevlar/Teflon weave, Fiberglass/Teflon weave, or other wear resistance weave coating. Examples of such materials are Dupont CP-0664, Kamatics Karon V, Kamatics P54, and Ultem 4001. The wear sleeve 40 may be made from a wear strips which are well known and are manufactured by companies such as Dupont and KAMATICS CORPORATION. DuPont's Vespel wear strips provide a suitable wear strip material for the wear sleeve 40. Vespel wear strips may be made from sheet-molded and fabric reinforced polyamide resin composite materials. The KAMATICS CORPORATION makes a wear strip material known as KAron wear strip material in the form of a fiberglass/epoxy backing of variable thickness with the KAron V liner system applied to one or both sides of the fiberglass. The KAron liner system is available in sheet or strip form and is well known for use in problem areas involving unintentional rubbing, scuffing or fretting.

The wear sleeve 40 may be bonded to the substrate 63 such as the groove ring 64 during new manufacture or as a repair or overhaul process. One exemplary method suitable for repair or refurbishment of the groove ring 64 includes grit blasting or otherwise removing old and possibly corroded material from a V-groove surface 72. The substrate 63 is grit blasted down to bare metal of the V-groove surface 72 then the entire bare V-groove surface 72 is coated with a structural bonding agent 74 that is resistant to corrosion. Then the molded wear sleeve 40 is laid on to the bonding agent 74 that fits a three dimensional (3D) contour of the V-groove 34 in such a way so that they form the essential points of contact for load transferal between the V-blade 30 and the V-groove 34. The bonding agent should be durable against the compressive and shear loads that the V-blade 30 transmits to the V-groove 34.

Suitable bonding agents include epoxy in liquid, paste, or film, or other adhesive types, that cures at room temperature or elevated temperatures and sufficiently bonds the wear sleeve in place so as to withstand the V-groove/blade loading and corrosive environment. Examples of such bonding agents include Hysol EA9394, Hysol EA9396, 3M AF3901 Film adhesive, 3M AF163 Film Adhesive, RTV/silicone rubber adhesives, Hysol9309, Hysol EA9460, 3M Scotchweld 460, and Araldite 2011. The repair or refurbishment method may be done with the engine still mounted on the aircraft such as on the wing or on an aircraft's fuselage.

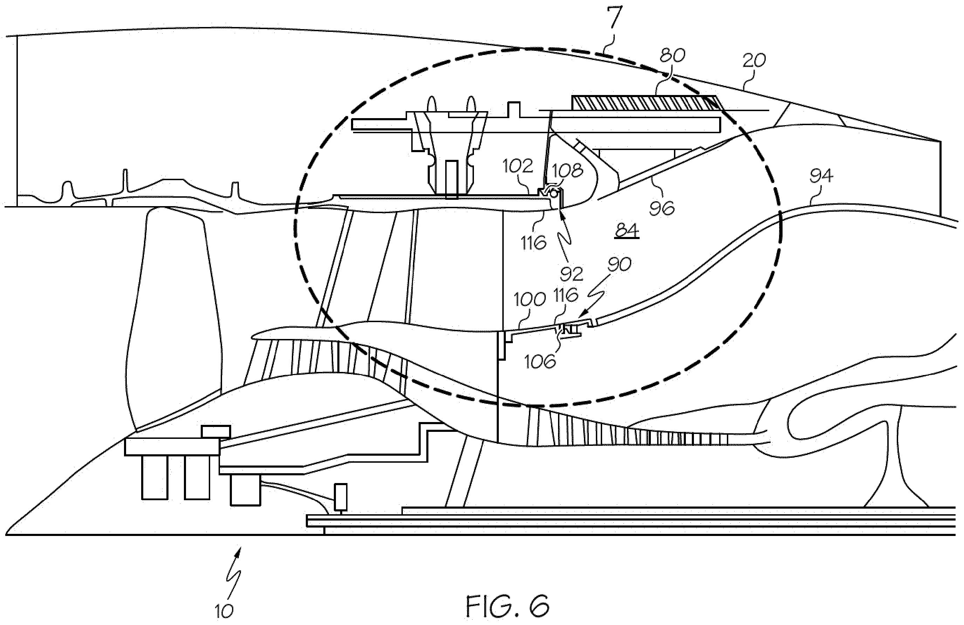

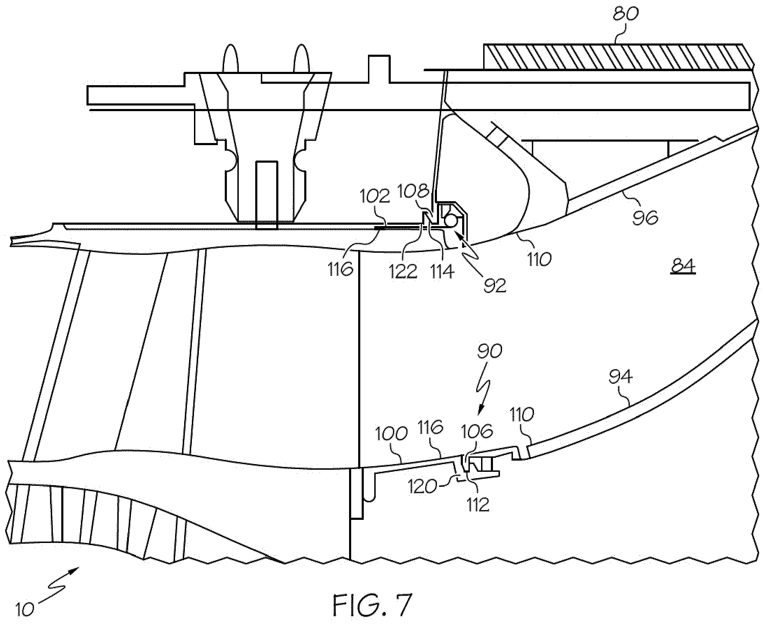

FIGS. 6 and 7 illustrate an exemplary aircraft turbofan gas turbine engine 10 with a cowl mounted reverser 80 and a bypass duct extension 84 mounted to a clamshell core engine cowl 20. Radially spaced apart inner and outer cowl clamping mechanisms 90, 92 clamp radially spaced apart annular inner and outer duct walls 94, 96 of the bypass duct extension 84 to radially spaced apart annular inner and outer fan casings 100, 102 respectively of the engine 10. The inner and outer cowl clamping mechanisms 90, 92 include inner and outer V-blades 106, 108 on forward ends 110 of the inner and outer duct walls 94, 96 and inner and outer V-grooves 112, 114 in inner and outer groove rings 120, 122 on aft ends 116 of the inner and outer fan casings 100, 102 respectively of the engine 10.

Molded composite wear sleeves 40 illustrated in FIGS. 4 and 5 and described above may be bonded in the inner and outer V-grooves 112, 114. The molded composite wear sleeves 40 are bonded with epoxy or other bonding agent or otherwise attached into the V-grooves to serve as the wear material system to protect V-blade to V-groove interfaces 38 from fretting. The groove ring 64 is attached to the fan casing 26 both of which may be made of metal or they both may be of a composite material. The V-blade 30 and the groove ring 64 which contains the V-groove 34 may be made from composite materials such as those made with woven composite matrix materials.

While there have been described herein what are considered to be preferred and exemplary embodiments of the present invention, other modifications of the invention shall be apparent to those skilled in the art from the teachings herein.

The invention is as defined and differentiated in the following claims:

## Claims

1. A clamping assembly (22) comprising an annular molded composite wear sleeve (40), an epoxy or other bonding agent (70), an annular groove ring (64), and an annular V-blade (30), wherein the annular groove ring (64) comprises an annular V-groove (34), the annular molded composite wear sleeve (40) is bonded with the epoxy or other bonding agent (70) in the annular V-groove (34) in the groove ring (64), wherein the V-blade (30) is matable with the wear sleeve (40).

2. The assembly (22) as claimed in claim 1, further comprising the wear sleeve (40) including forward and aft sleeve walls (46, 48) extending at forward and aft sleeve angles (50, 52) respectively away from a sleeve bottom (44).

3. The assembly (22) as claimed in claim 2, wherein the wear sleeve (40) further comprises annular forward and aft sleeve fillets (54, 56) connecting the sleeve bottom (44) to the forward and aft sleeve walls (46, 48).

4. The assembly (22) as claimed in claim 3, further comprising the aft sleeve wall (48) including an aft flap (60) compliant with an annular aft taper (62) on the annular groove ring (64) containing the V-groove (34).

5. An aircraft gas turbine engine cowl clamping mechanism (22) for clamping a clamshell cowl (20) to a fan casing (26), the mechanism comprising a fan casing (26) and the clamping assembly of any of claims 1 to 4, wherein the groove ring (64) is provided on the fan casing (26).

6. The mechanism (22) as claimed in claim 5, further comprising a clamshell core engine cowl (20), the annular V-blade (30) provided on the clamshell core engine cowl and the clamshell core engine cowl (20) rotatable to insert the annular V-blade (30) in the wear sleeve (40).

7. An aircraft turbofan gas turbine engine (10) comprising:
a reverser (80) and a bypass duct extension (84) mounted to a clamshell core engine cowl (20),
radially spaced apart inner and outer cowl clamping mechanisms (90, 92) clamping radially spaced apart annular inner and outer duct walls (94, 96) of the bypass duct extension (84) to radially spaced apart annular inner and outer fan casings (100, 102) respectively of the engine (10),
the inner and outer cowl clamping mechanisms (90, 92) each comprising a clamping assembly in accordance with any of claims 1 to 4, the inner and outer cowl clamping mechanisms (90, 92) including inner and outer V-blades (106, 108) on forward ends (110) of the inner and outer duct walls (94, 96) and inner and outer V-grooves (112, 114) in inner and outer groove rings (120, 122) on aft ends (116) of the inner and outer fan casings (100, 102) respectively, wherein annular inner and outer molded composite wear sleeves (40) are bonded with the epoxy or other bonding agent in the inner and outer V-grooves (112, 114) respectively.

8. An engine (10) as claimed in claim 7, wherein the aft sleeve wall (48) including an aft flap (60) compliant with an annular aft taper (62) on each of the inner and outer groove rings (120, 122) containing the inner and outer V-grooves (112, 114) respectively, and
the clamshell core engine cowl (20) is rotatable to insert the inner and outer V-blades (106, 108) in the inner and outer V-grooves (112, 114) respectively.

9. A method for preventing excessive fretting between an annular V-blade (30) and a mating annular V-groove (34) in an annular groove ring (64), the method comprising:
bonding an annular molded composite wear sleeve (40) with epoxy or other bonding agent in the annular V-groove (34) in the annular groove ring (64); and
mating the V-blade (30) with the wear sleeve (40).

10. The method as claimed in claim 9, further comprising laying on and fitting the annular molded composite wear sleeve (40) to a three dimensional contour of the annular V-groove (34) such that essential points of contact for load transferal between the V-blade (30) and the V-groove (34) are formed after the coating of the entirety of a bare surface (72) of the V-groove with the structural bonding agent (74).

11. The method as claimed in either of claim 9 or 10, further comprising performing the method with the engine mounted on an aircraft.

12. The method as claimed in any of claims 9 to 11, further comprising grit blasting or otherwise removing old and possibly corroded material from the surface (72) of the annular V-groove (34) before bonding the wear sleeve (40) in the V-groove (34).

13. The method as claimed in claim 12, further comprising the grit blasting including grit blasting down to bare metal of the V-groove surface (72) then coating the entire bare V-groove surface (72) with a structural bonding agent (74) that is resistant to corrosion.

## Patentansprüche

1. Klemmbaugruppe (22) umfassend eine ringförmige Verschleißhülse (40) aus geformtem Verbundwerkstoff, ein Epoxidharz oder ein anderes Haftmittel (70), einen ringförmigen Sicherungsring (64) und eine ringförmige V-Schaufel (30), wobei der ringförmige Sicherungsring (64) eine ringförmige V-Nut (34) umfasst, die ringförmige Verschleißhülse aus geformtem Verbundwerkstoff (40) mit dem Epoxidharz oder dem anderen Haftmittel (70) in der ringförmigen V-Nut (34) in dem Sicherungsring (64) verbunden ist, wobei die V-Schaufel (30) mit der Verschleißhülse (40) verpaarbar ist.

2. Baugruppe (22) nach Anspruch 1, weiter umfassend die Verschleißhülse (40) einschließlich vorderer und hinterer Hülsenwände (46, 48), die sich in jeweils vorderen und hinteren Hülsenwinkeln (50, 52) von einem Hülsenboden (44) weg erstrecken.

3. Baugruppe (22) nach Anspruch 2, wobei die Verschleißhülse (40) weiter ringförmige vordere und hintere Hülsenleisten (54, 56) umfasst, die den Hülsenboden (44) mit den vorderen und hinteren Hülsenwänden (46, 48) verbinden.

4. Baugruppe (22) nach Anspruch 3, weiter umfassend die hintere Hülsenwand (48) einschließlich einer hinteren Klappe (60), die mit einem ringförmigen hinteren Reduzierkonus (62) auf dem ringförmigen Sicherungsring (64) übereinstimmt, der die V-Nut (34) einschließt.

5. Klemmmechanismus (22) für eine Triebwerksverkleidung für Flugzeuggasturbinen zum Anklemmen einer Klappverkleidung (20) an einem Ventilatorgehäuse (26), wobei der Mechanismus ein Ventilatorgehäuse (26) und die Klemmbaugruppe eines der Ansprüche 1 bis 4 umfasst, wobei der Sicherungsring (64) an dem Ventilatorgehäuse (26) bereitgestellt ist.

6. Mechanismus (22) nach Anspruch 5, weiter umfassend eine zweischalige Triebwerksverkleidung (20), wobei die ringförmige V-Schaufel (30), die an der zweischaligen Triebwerksverkleidung vorgesehen ist, und die zweischalige Triebwerksverkleidung (20) drehbar sind, um die ringförmige V-Schaufel (30) in die Verschleißhülse (40) einzusetzen.

7. Turbofan-Gasturbinentriebwerk für Flugzeuge (10), umfassend:
einen Schubumkehrer (80) und eine Bypasskanal-Verlängerung (84), die an einer zweischaligen Triebwerksverkleidung (20) montiert sind,
radial beabstandete innere und äußere Verkleidungs-Klemmmechanismen (90, 92), die radial beabstandete ringförmige innere und äußere Kanalwände (94, 96) der Bypasskanal-Verlängerung (84) auf radial beabstandete ringförmige jeweils innere und äußere Ventilatorhäuse (100, 102) des Motors (10) klemmen,
die inneren und äußeren Verkleidungs-Klemmmechanismen (90, 92), jeweils umfassend eine Klemmbaugruppe nach einem der Ansprüche 1 bis 4, wobei die inneren und äußeren Verkleidungs-Klemmmechanismen (90, 92) innere und äußere V-Schaufeln (106, 108) an vorderen Enden (110) der inneren und äußeren Kanalwände (94, 96) und innere und äußere V-Nuten (112, 114) in inneren und äußeren Nutringen (120, 122) an den hinteren Enden (116) der jeweils inneren und äußeren Ventilatorgehäuse (100, 102) einschließen, wobei die ringförmigen inneren und äußeren Verschleißhülsen (40) aus geformtem Verbundwerkstoff mit dem Epoxidharz oder einem anderen Haftmittel in den jeweils inneren und äußeren V-Nuten (112, 114) verbunden sind.

8. Triebwerk (10) nach Anspruch 7, wobei die hintere Hülsenwand (48) eine hintere Klappe (60) einschließt, welche mit einem ringförmigen hinteren Reduzierkonus (62) an jedem der inneren und äußeren Sicherungsringe (120, 122) übereinstimmt, die jeweils die inneren und äußeren V-Nuten (112, 114) einschließen, und
die zweischalige Triebwerksverkleidung (20) drehbar ist, um die inneren und äußeren V-Schaufeln (106, 108) jeweils in die inneren und äußeren V-Nuten (112, 114) einzusetzen.

9. Verfahren zum Verhindern eines übermäßigen Scheuerns zwischen einer ringförmigen V-Schaufel (30) und einer verpaarten ringförmigen V-Nut (34) in einem ringförmigen Sicherungsring (64), wobei das Verfahren umfasst:
Verklebung einer ringförmigen Verschleißhülse (40) aus geformtem Verbundwerkstoff mit Epoxid oder einem anderen Haftmittel in der ringförmigen V-Nut (34) im ringförmigen Sicherungsring (64); und
Verpaarung der V-Schaufel (30) mit der Verschleißhülse (40).

10. Verfahren nach Anspruch 9, weiter umfassend das Auflegen und Einpassen der ringförmigen Verschleißhülse aus geformtem Verbundwerkstoff (40) auf eine dreidimensionale Kontur der ringförmigen V-Nut (34), sodass wesentliche Kontaktpunkte zur Lastübertragung zwischen der V-Schaufel (30) und der V-Nut (34) nach der Beschichtung der Gesamtheit einer blanken Fläche (72) der V-Nut mit dem Strukturkleber (74) gebildet werden.

11. Verfahren nach Anspruch 9 oder 10, umfassend weiter die Durchführung des Verfahrens mit dem an einem Flugzeug montierten Triebwerk.

12. Verfahren nach einem der Ansprüche 9 bis 11, umfassend weiter das Sandstrahlen oder anderweitige Entfernen von altem und möglicherweise korrodiertem Material von der Oberfläche (72) der ringförmigen V-Nut (34), bevor die Verschleißhülse (40) in der V-Nut (34) verklebt wird.

13. Verfahren nach Anspruch 12, umfassend weiter das Sandstrahlen einschließlich des Sandstrahlens bis zum blanken Metall der V-Nut-Oberfläche (72) und anschließendes Beschichten der gesamten blanken V-Nut-Oberfläche (72) mit einem korrosionsbeständigen Strukturkleber (74).

## Revendications

1. Ensemble de blocage (22) comprenant un manchon de protection composite annulaire moulé (40), une résine époxyde ou un autre agent liant (70), un anneau à rainure annulaire (64) et une lame en V annulaire (30), dans lequel l'anneau à rainure annulaire (64) comprend une rainure en V annulaire (34), le manchon de protection composite annulaire moulé (40) est lié avec la résine époxyde ou un autre agent liant (70) dans la rainure annulaire en V (34) de l'anneau à rainure (64), dans lequel la lame en V (30) peut s'accoupler au manchon de protection (40).

2. Ensemble (22) selon la revendication 1, comprenant en outre le manchon de protection (40) comprenant des parois de manchon avant et arrière (46, 48) s'étendant sous des angles de manchon avant et arrière (50, 52), respectivement, s'écartant d'un fond (44) du manchon.

3. Ensemble (22) selon la revendication 2, dans lequel le manchon de protection (40) comprend en outre des flancs de manchon avant et arrière annulaires (54, 56) raccordant le fond (44) du manchon aux parois avant et arrière (46, 48) du manchon.

4. Ensemble (22) selon la revendication 3, comprenant en outre la paroi arrière (48) du manchon qui comprend un volet arrière (60) se conformant à une conicité annulaire arrière (62) sur l'anneau à rainure annulaire (64) contenant la rainure en V (34).

5. Mécanisme de blocage de capot de moteur à turbine à gaz d'aéronef (22) pour bloquer un capot à grappin (20) à un boîtier de ventilateur (26), le mécanisme comprenant un boîtier de ventilateur (26) et l'ensemble de blocage selon l'une quelconque des revendications 1 à 4, dans lequel l'anneau à rainure (64) est monté sur le boîtier de ventilateur (26).

6. Mécanisme (22) selon la revendication 5, comprenant en outre un capot de moteur central à grappin (20), la lame en V annulaire (30) disposée sur le capot de moteur central à grappin et le capot de moteur central à grappin (20) qui peut tourner pour insérer la lame en V annulaire (30) dans le manchon de protection (40).

7. Moteur à turbine à gaz à turboventilateur d'aéronef (10) comprenant :
un inverseur (80) et une extension de conduit de dérivation (84) montés sur un capot de moteur central à grappin (20),
des mécanismes de blocage de capot interne et externe (90, 92) radialement espacés bloquant des parois de conduit interne et externe annulaires espacées radialement (94, 96) de l'extension de conduit de dérivation (84) sur des boîtiers de ventilateur interne et externe annulaires radialement espacés (100, 102), respectivement, du moteur (10),
les mécanismes de blocage de capot interne et externe (90, 92) comprenant chacun un ensemble de blocage selon l'une quelconque des revendications 1 à 4, les mécanismes de blocage de capot interne et externe (90, 92) comprenant des lames en V interne et externe (106, 108) sur les extrémités avant (110) des parois de conduit interne et externe (94, 96) et des rainures en V interne et externe (112, 114) dans des anneaux à rainure interne et externe (120, 122) sur les extrémités arrière (116) des boîtiers de ventilateur interne et externe (100, 102), respectivement, dans lequel des manchons de protection composites moulés interne et externe annulaires (40) sont liés avec la résine époxyde ou un autre agent liant dans les rainures en V interne et externe (112, 114), respectivement.

8. Moteur (10) selon la revendication 7, dans lequel la paroi de manchon arrière (48) comprend un volet arrière (60) qui se conforme à une conicité arrière annulaire (62) sur chacun des anneaux à rainure interne et externe (120, 122) contenant les rainures en V interne et externe (112, 114), respectivement, et
le capot de moteur central à grappin (20) peut tourner pour insérer les lames en V interne et externe (106, 108) dans les rainures en V interne et externe (112, 114), respectivement.

9. Procédé pour empêcher une érosion excessive entre une lame en V annulaire (30) et une rainure en V annulaire connexe (34) dans un anneau à rainure annulaire (64), le procédé comprenant :
la liaison d'un manchon de protection composite annulaire moulé (40) avec une résine époxyde ou un autre agent liant dans la rainure en V annulaire (34) de l'anneau à rainure annulaire (64) ; et
l'accouplement de la lame en V (30) avec le manchon de protection (40).

10. Procédé selon la revendication 9, comprenant en outre l'applique et l'ajustement du manchon de protection composite annulaire moulé (40) à un contour tridimensionnel de la rainure en V annulaire (34) de sorte que des points essentiels de contact pour le transfert de charge entre la lame en V (30) et la rainure en V (34) soient formées après le revêtement de la totalité d'une surface nue (72) de la rainure en V par l'agent liant structurel (74).

11. Procédé selon l'une quelconque des revendications 9 ou 10, comprenant en outre la réalisation du procédé avec le moteur monté sur un aéronef.

12. Procédé selon l'une quelconque des revendications 9 à 11, comprenant en outre un sablage ou un autre retrait d'un matériau ancien et éventuellement corrodé de la surface (72) de la rainure en V annulaire (34) avant la liaison du manchon de protection (40) dans la rainure en V (34).

13. Procédé selon la revendication 12, comprenant en outre le sablage qui comprend le sablage jusqu'au métal nu de la surface de rainure en V (72), puis le revêtement de la totalité de la surface de rainure en V nue (72) par un agent liant structurel (74) qui résiste à la corrosion.
